# EUROPEAN PATENT SPECIFICATION

(11) **EP 2 331 624 B1**
(45) Date of publication and mention of the grant of the patent: **15.02.2012**
(21) Application number: 09783140.8
(22) Date of filing: 18.09.2009
(51) Int. Cl.: C08K 5/357, C08L 75/08, C08J 5/24

(54) **BENZOXAZINE-BASED COMPOSITIONS CONTAINING ISOCYANATE-BASED TOUGHENERS**
ZUSAMMENSETZUNGEN AUF BENZOXAZIN-BASIS MIT ZÄHIGKEITSVERMITTLERN AUF ISOCYANATBASIS
COMPOSITIONS À BASE DE BENZOXAZINE CONTENANT DES DURCISSEURS À BASE D ISOCYANATE

(30) Priority: 19.09.2008 US 98451 P
(43) Date of publication of application: 15.06.2011
(73) Proprietor: Henkel AG & Co. KGaA, 40589 Düsseldorf (DE)
(72) Inventor: SCHÖNFELD, Rainer, 40221 Düsseldorf (DE); TADEN, Andreas, 40597 Düsseldorf (DE); KUX, Michael, 40789 Monheim (DE); KÜSTER, Harald, 40625 Düsseldorf (DE); LEHMANN, Stanley Leroy, Martinez, CA 94553 (US)
(86) International application number: PCT/EP2009/062080
(87) International publication number: WO 2010/031826

(56) References cited:
- WO-A1-2007/064801
- WO-A1-2008/076244
- WO-A2-2009/075743
- WO-A2-2009/075744
- TAKEICHI T ET AL: "Synthesis and characterization of poly(urethane-benzoxazine) films as novel type of polyurethane/phenolic resin composites" JOURNAL OF POLYMER SCIENCE, PART A: POLYMER CHEMISTRY 20001115 JOHN WILEY & SONS INC, vol. 38, no. 22, 15 November 2000 (2000-11-15), pages 4165-4176, XP002562050

## Description

### BACKGROUND OF THE INVENTION

### Field of the invention

The present invention relates to curable compositions comprising (a) at least one benzoxazine component selected from the group consisting of N-alkyl and N-alkenyl benzoxazines, and (b) a prepolymer produced from a diisocyanate. The compositions are particularly suitable in the production of adhesives and sealants, prepregs and towpregs.

### Brief description of related technology

Mixtures of epoxy resins and phenol-capped polyurethanes are known. Polyurethanes are obtained ordinarily by reacting isocyanates with hydroxy-containing compounds; the resulting polyurethane products should no longer contain free, phenolic hydroxyl groups. Such polyurethane products may be combined with epoxy resins and amine curing agents to give curable coating agents reportedly distinguished by improved elasticity. See e.g. U.S. Patent Nos. 4,423,201 and 3,442,974.

Epoxy resins can also be mixed with copolymers based on butadiene and acrylonitrile to enhance the impact strength and/or the flexibility of the cured product. Ordinarily, however, such copolymers compromise the tensile shear strength and the glass transition temperature of the resulting cured products.

U.S. Patent No. 5,278,257 (Muelhaupt) refers to and claims a composition containing a copolymer based on at least one 1,3-diene and at least one polar, ethylenically unsaturated comonomer, a phenol-terminated polyurethane, polyurea or polyurea-urethane of a certain formula, after the removal of the terminal isocyanate, amino or hydroxyl groups, which is soluble or dispersible in epoxy resins, it being necessary for at least one of these groups to be a tertiary amine and where the ratio by weight of the comonomer to the polyurethane, polyurea or polyurea-urethane is from 5:1 to 1:5, and an epoxy resin having at least two 1,2-epoxide groups per molecule.

U.S. Patent Application Publication No. 2005/0070634 describes a composition comprising a) one or more epoxy resins; b) one or more rubber modified epoxy resins; c) one or more toughening compositions comprising the reaction product of one or more isocyanate terminated prepolymers and one or more capping compounds having one or more bisphenolic, phenolic, benzyl alcohol, aminophenyl or benzylamino moieties where the reaction product is terminated with the capping compound; d) one or more curing agents and one or more catalysts for epoxy resins which initiates cure at a temperature of about 100°C or greater; and e) optionally, fillers, adhesion promoters, wetting agents and rheological additives useful in epoxy adhesive compositions. The resulting adhesive composition is reported to have a viscosity at 45°C of about 20 Pa·s to about 400 Pa·s.

Blends of epoxy resins and benzoxazines are also known. See e.g. U.S. Patent Nos. 4,607,091 (Schreiber), 5,021,484 (Schreiber), and 5,200,452 (Schreiber). These blends appear to be potentially useful commercially, as the epoxy resins can reduce the melt viscosity of benzoxazines allowing for the use of higher filler loading while maintaining a processable viscosity. However, epoxy resins oftentimes undesirably increase the temperature at which benzoxazines polymerize.

Ternary blends of epoxy resins, benzoxazine and phenolic resins are known as well. See e.g. U.S. Patent No. 6,207,786 (Ishida).

Blends of benzoxazines and curable materials other than epoxy and/or phenolics are also known. To that end, U.S. Patent No. 6,620,905 (Musa) is directed to and claims a curable composition comprising certain benzoxazine compounds without reactive functionality other than the benzoxazine (apart from allyl and propargyl which are disclosed but not claimed) and a curable compound or resin selected from vinyl ethers, vinyl silanes, compounds or resins containing vinyl or allyl functionality, thiolenes, compounds or resins containing cinnamyl or styrenic functionality, fumarates, maleates, acrylates, maleimides, cyanate esters, and hybrid resins containing both vinyl silane and cinnamyl, styrenic, acrylate or maleimide functionality.

In addition, U.S. Patent No. 6,743,852 (Dershem) discloses combinations of liquid benzoxazines and a thermosetting resin composition for adhering materials with dissimilar coefficients of thermal expansion comprising a) a benzoxazine compound in liquid form, b) thermoset compounds including epoxy, cyanate ester, maleimide, acrylate, methacrylate, vinyl ether, styrenic, vinyl ester, propargyl ether, diallyl amide, aromatic acetylene, benzocyclobutene, thiolenes, maleate, oxazoline, and itaconate, c) optionally, one or more anti-oxidants, bleed control agents, fillers, diluents, coupling agents, adhesion promoters, flexibilizers, dyes and pigments, and d) a cure initiator.

Rimdusit et al. teaches in "Toughening of Polybenzoxazine by Alloying with Polyurethane Prepolymer and flexible Epoxy: A comparative study", Polym. Eng. Sci. (2005) 288-296 the use of isophorone diisocyanate based polyurethane-prepolymers alloyed with polybenzoxazine and flexible epoxy.

Cured compositions having an improved toughness and compression after impact are disclosed in International Patent Application Publication No. WO 2007/064801 A1 (Li). The so disclosed curable compositions comprise (a) a large variety of benzoxazines, in combination with (b) a combination of adducts one of which is prepared from hydroxy-containing compounds, isocyanate-containing compounds and phenolic compounds and the second of which is prepared from the first adduct and epoxy-containing compounds, (c) epoxy resins and (d) optionally tougheners.

Notwithstanding the state of the technology it would be desirable to provide alternative curable compositions that provide toughening solutions to performance deficiencies in some curable compositions.

### SUMMARY OF THE INVENTION

The present invention provides compositions that include at least one benzoxazine component selected from N-alkyl and N-alkenyl benzoxazine compounds in combination with end-capped prepolymers which can be prepared from diisocyanates. Such curable compositions according to the invention show sufficient flexural modulus and toughness, even without added epoxy resin. However, the curable compositions of the present invention can also be supplemented with epoxy resins without losing their advantages properties in case the use of the epoxy resin is desired for specific applications.

The present invention thus provides curable compositions comprising: (A) at least one benzoxazine component selected from the group consisting of N-alkyl and N-alkenyl benzoxazine compounds, and (B) a prepolymer of the following general structure:

P-(X-CO-NH-D-NH-CO-Y-E)_{z}

where P is a z-valent residue of an oligomer or polymer; X and Y independently are selected from the group consisting of NR, O and S, where R' is hydrogen or a residue selected from the group consisting of aliphatic, heteroaliphatic, araliphatic, heteroaraliphatic, aromatic and heteroaromatic residues; D is a divalent residue of a diisocyanate from which the two isocyanate groups have been removed to form two binding sites (valences); E is an end-capping residue, selected from the group consisting of aliphatic, heteroaliphatic, araliphatic, heteroaraliphatic, aromatic and heteroaromatic residues; z is an integer of 1 to 12; and said prepolymer has a number average molecular weight in the range of 1000 to 54000 g/mol.

The curable compositions of the present invention can be prepared by mixing at least one benzoxazine component selected from the group consisting of N-alkyl and N-alkenyl benzoxazine compounds with the prepolymer.

The prepolymer can be built by reacting a polymer P-(XH)_{z}, wherein the z XH groups are independently NHR', OH or SH, are reacted with a diisocyanate D-(NCO)₂ and an end-capping reagent E-YH. The reaction is preferably carried out in a way that each of the z XH groups is reacted with one molecule of the diisocyanate to obtain an isocyanate terminated intermediate having the following structure:

P-(X-CO-NH-D-NCO)_{z}

where the residues are as described above. This intermediate is finally reacted with the an appropriate amount of the end-capper E-YH to react essentially all of the terminal isocyanate groups and to obtain the target compound above.

Suitable polymers P-(XH)_{z}, diisocyanates D-(NCO)₂ and end-cappers E-YH will be described in detail below as well as suitable N-alkyl and N-alkenyl benzoxazines.

The compositions of the present invention are in particular suitable as adhesives, sealants and matrices for the preparation of reinforced material such as prepregs and towpregs.

The invention also provides a cured product of the composition of the present invention, in particular cured products containing bundles or layers of fibers, and a method of preparing such material.

### DETAILED DESCRIPTION OF THE INVENTION

### Benzoxazine Component

The benzoxazine component of the present invention is selected from the group consisting of N-alkyl and N-alkenyl benzoxazine compounds.

The term "N-alkyl benzoxazine compound" as used herein refers to any benzoxazine compound carrying an alkyl residue directly bound at the benzoxazine nitrogen atom.

The term "N-alkenyl benzoxazine compound" as used herein refers to any benzoxazine compound carrying an alkenyl residue directly bound at the benzoxazine nitrogen atom.

In accordance with the definition above the N-alkyl or N-alkenyl benzoxazine compounds can be any curable monomer, oligomer or polymer comprising at least one benzoxazine moiety. Preferably monomers containing up to four benzoxazine moieties are employed in form of single compounds or mixtures of two or more different benzoxazines.

In the following a broad spectrum of different suitable N-alkyl or N-alkenyl benzoxazine compounds containing one to four benzoxazine moieties are presented

One group of N-alkyl or N-alkenyl benzoxazine compounds of the present invention may be embraced by the following structure: 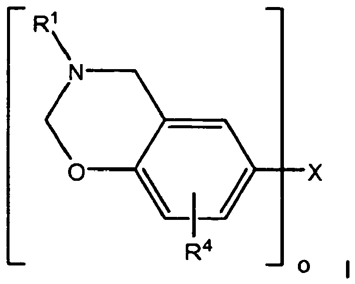 wherein o is 1-4, X is selected from the group consisting of the group consisting of a direct bond (when o is 2), alkyl (when o is 1), alkylene (when o is 2-4), carbonyl (when o is 2), oxygen (when o is 2), thiol (when o is 1), thioether (when o is 2), sulfoxide (when o is 2), and sulfone (when o is 2), R₁ is selected from alkyl and alkenyl, and R₄ is selected from hydrogen, halogen, alkyl and alkenyl or R⁴ is a divalent residue creating a naphthoxazine residue out of the benzoxazine structure.

More specifically, within structure I N-alkyl or N-alkenyl benzoxazine compounds of the present invention may be embraced by the following structure: 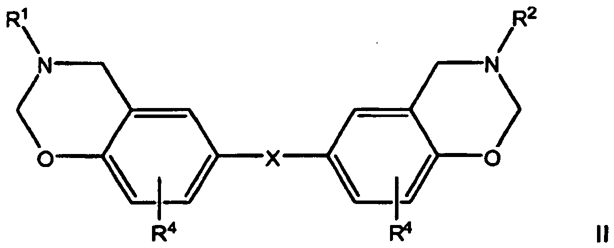 where X is selected from a direct bond, CH₂, C(CH₃)₂, C=O, O, S, S=O and O=S=O, R₁ and R₂ are the same or different alkyl or alkenyl residues and R₄ are the same or different and defined as above.

Representative N-alkyl or N-alkenyl benzoxazine compounds within structure II include: 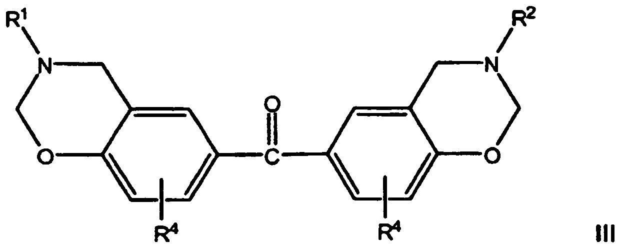 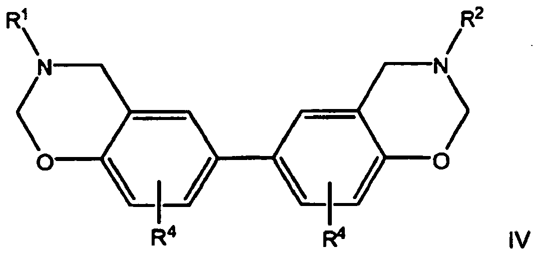 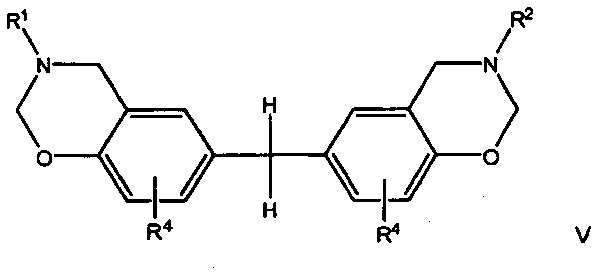 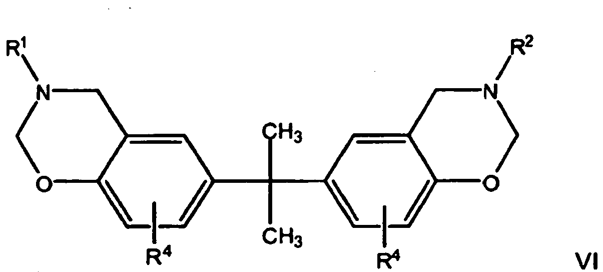 where R¹, R² and R⁴ are as defined above.

Though not embraced by structure I additional N-alkyl or N-alkenyl benzoxazine compounds are within the following structures: 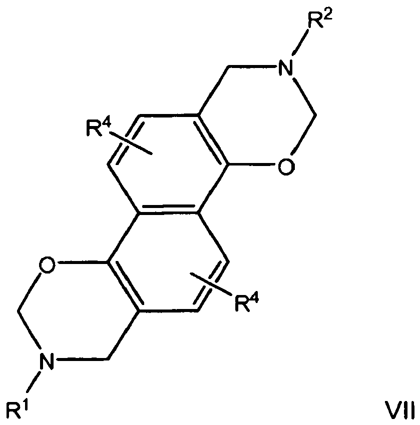 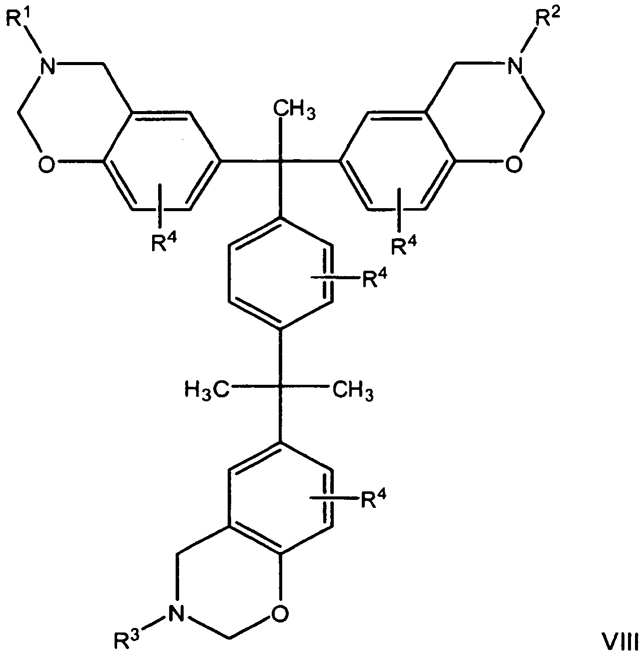 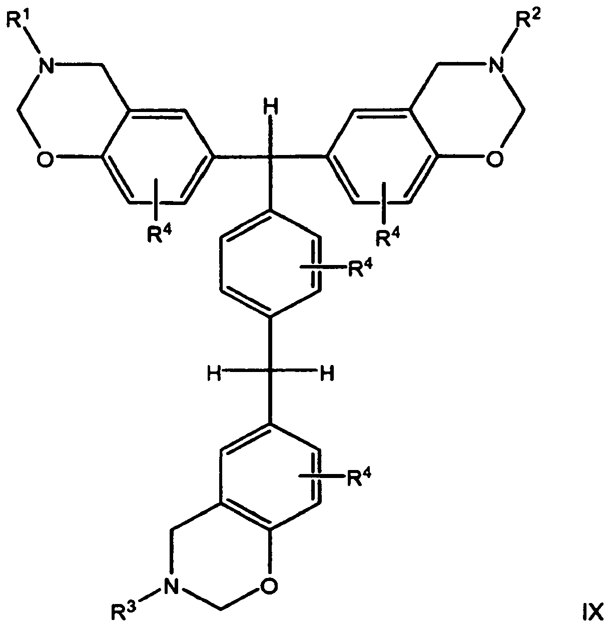 where R¹, R² and R⁴ are as defined above, and R₃ is defined as R₁ or R₂.

Specific examples of suitable N-alkyl and N-alkenyl benzoxazine compounds include:

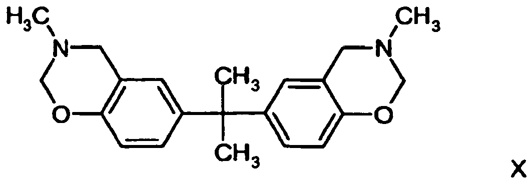

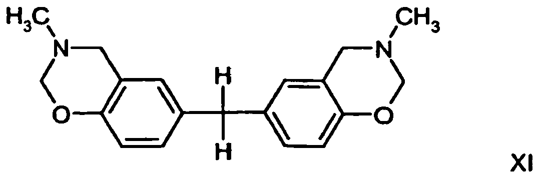

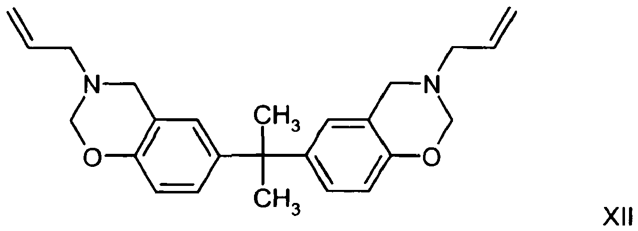

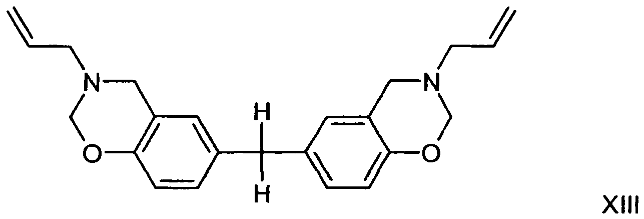

The benzoxazine component selected from the group consisting of N-alkyl and N-alkenyl benzoxazine compounds may include the combination of multifunctional benzoxazine compounds and monofunctional benzoxazine compounds, or may be the combination of one or more multifunctional benzoxazine compounds or one or more monofunctional benzoxazine compounds.

Examples of monofunctional benzoxazine compounds selected from the group consisting of N-alkyl and N-alkenyl benzoxazine compounds may be embraced by the following structure: 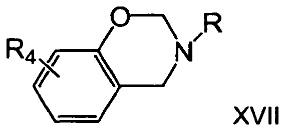 where R is an alkyl or alkenyl residue with or without substitution on one, some or all of the available substitutable sites, and R₄ is selected from hydrogen, halogen, alkyl, and alkenyl, or R₄ is a divalent residue creating a naphthoxazine residue out of the benzoxazine structure.

In one preferred embodiment the at least one benzoxazine component of the present invention only consists of one or several N-alkyl benzoxazine compound(s).

In another preferred embodiment the at least one benzoxazine component of the present invention only consists of one or several N-alkenyl benzoxazine compound(s).

However in another preferred embodiment it can be desirable that the at least benzoxazine component of the present invention comprises a mixture of at least one N-alkyl benzoxazine compound and at least one N-alkenyl benzoxazine compound.

Benzoxazine compounds are presently available commercially from several sources, including Huntsman Advanced Materials; Georgia-Pacific Resins, Inc.; and Shikoku Chemicals Corporation, Chiba, Japan, the last of which offers among others Bisphenol A-aniline, Bisphenol A-methylamin, Bisphenol F-aniline benzoxazine resins. If desired, however, instead of using commercially available sources, the benzoxazine may typically be prepared by reacting a phenolic compound, such as a bisphenol A, bisphenol F, bisphenol S or thiodiphenol, with an aldehyde and an aryl amine. U.S. Patent No. 5,543,516 describes a method of forming benzoxazine compounds, where the reaction time can vary from a few minutes to a few hours, depending on reactant concentration, reactivity and temperature. See generally U.S. Patent Nos. 4,607,091 (Schreiber), 5,021,484 (Schreiber), and 5,200,452 (Schreiber).

Any of the before-mentioned benzoxazine compounds may contain partially ring-opened benzoxazine structures. However, for the purpose of this invention those structures are still considered to be benzoxazine moieties, in particular ring-opened benzoxazine moieties.

The benzoxazine components selected from the group consisting of N-alkyl and N-alkenyl benzoxazine compounds may be present in the inventive composition in an amount in the range of about 50 to about 95 percent by weight, more preferably about 55 to about 85 percent by weight, and most preferably about 60 to about 80 percent by weight, based on the total weight of the curable composition of the present invention. Amount of less than 50 percent by weight will usually negatively affect the flexural modulus of the cured compositions and amounts exceeding 95 percent of N-alkyl and/or N-alkenyl benzoxazine compounds will usually lead to cured composition with only small increase in toughness represented by K_{1C} and G_{1C} values.

Benzoxazine polymerization can be self-initiated under elevated temperature conditions and also by inclusion of anhydrides or cationic initiators, such as Lewis acids, and other known cationic initiators, such as metal halides; organometallic derivatives; metallophorphyrin compounds such as aluminum phthalocyanine chloride; methyl tosylate, methyl triflate, and triflic acid; and oxyhalides. Likewise, basic materials, such as imidazole s, or anhydrides may be used to initiate polymerization.

### Prepolymers ("PP")

Prepolymers PP having a number average molecular weight of above 54000 g/mol are excluded from the present invention because these polymers exhibit a reduced compatibility to the benzoxazine component of the present invention.

The term "compatibility" means that by mixing a prepolymer and at least one benzoxazine component no macroscopic phase separation of the curable composition occurs.

Additionally prepolymers PP having a number average molecular weight of above 54000 g/mol are excluded from the present invention because these polymers significantly limit the simple and low-cost processability of the curable composition of the present invention by increasing the viscosity of said curable composition.

As noted the PP of the present invention are prepared reacting one or more hydroxyl, amino and/or thiol containing polymers, in particular such polymers introducing thermoplastic properties into the prepolymer, with one or more diisocyanates and one or more end-capping agents ("end-cappers") comprising at least one hydroxyl, thiol or amino group being reactive towards isocyanate.

For these reactants, the hydroxyl, amino and/or thiol containing polymer, is reacted with one or more diisocyanates for a time and amount sufficient to ensure isocyanate capping of the hydroxyl, amino and/or thiol containing polymer or oligomer. Thus, the polymer or oligomer may be mixed with one or more diisocyanates and reacted at a temperature in the range of about 50°C to about 80°C for a period of about 0.5 to 2.5 hours, desirably under an inert atmosphere, such as a nitrogen blanket, to form an isocyanate-terminated prepolymer intermediate, with which the end-capper is reacted resulting in the formation of prepolymer to be used in the compositions of the present invention.

Alternative routes can be used to prepare the prepolymer, as well.

Illustrative of such alternative routes is where the reaction is performed in the presence of a condensation catalyst. Examples of such catalysts include the stannous salts of carboxylic acids, such as stannous octoate, stannous oleate, stannous acetate, and stannous laureate; dialkyltin dicarboxylates, such as dibutyltin dilaureate and dibutyltin diacetate; tertiary amines and tin mercaptides. When used, the amount of catalyst employed is generally between about 0.00025 and about 5 percent by weight of the catalyzed reactants, depending on the nature of the reactants.

The PP must have a number average molecular weight in the range of 1000 to 54000 g/mol as measured by gel permeation chromatography ("GPC") using polystyrene standards for calibration purposes.

Preferably, the number average molecular weight of the PP is at least 2000 g/mol, preferably at least 5000 g/mol and most preferably at least 10000 g/mol.

It is further on preferred that the number average molecular weight of the PP is less than 50000 g/mol, preferably less than 40000 g/mol and most preferably less than 30000 g/mol.

In one embodiment of the invention the number average molecular weight of the PP is in the range of from 2000 g/mol to 40000 g/mol, preferably in the range of from 3000 g/mol to 30000 g/mol, and more preferably in the range of from 10000 g/mol to 30000 g/mol.

The PP (i.e. component B) may be used in an amount of 5 to 50, such as 15 to 45, most preferably 20 to 40 percent by weight, based on the total weight of the curable composition of the invention.

### Hydroxy, amino and/or thiol containing polymers P-(XH)_{z}

The polymeric or oligomeric part P of the P-(XH)_{z} polymer may be of such nature to introduce thermoplastic properties to the prepolymer. Therefore the chemical nature is variable in a wide range embracing polyethers, polyesters, polyamides, polyacrylates, polymethacrylates, polybutadienes, and polysiloxanes, of which the polyethers are desirable.

P can be linear or branched. P itself can already include urethane, urea or thiourethane groups originating from the reaction of low-molecular weight polyol, polyamines or polythiols. For example a triol such as glycerol or trimethylolpropane can be reacted with a polyisocyanate such as a diisocyanate to prepare an isocyanate terminated low-molecular weight monomer to which for example polyetherpolyols such as polyether diols can be attached

The hydroxyl, amino and/or thiol containing polymer (P-(XH)_{z}, definitions as above) used to make the prepolymer should preferably have a number average molecular weight ("Mₙ") of 500 to 4,000 g/mol more preferably 700 to 2,000 g/mol and most preferably 800 to 1,600 g/mol, as measured by gel permeation chromatography ("GPC") using polystyrene standards for calibration purposes.

The most preferred residue P is a polyalkylene oxide residue. The polyalkylene oxide include a series of hydrocarbon groups separated by oxygen atoms and terminated with hydroxyl, amino or thiol.

The hydrocarbon groups should preferably be alkylene groups - straight or branched chain - and should preferably have from 2 to about 6 carbons, such as about 2 to about 4 carbon atoms, desirably about 3 to about 4 carbon atoms.

The alkylene groups may be thus derived from ethylene oxide, propylene oxides, butylene oxides or tetrahydrofuran. The hydroxyl, amino and/or thiol terminated polyalkylene oxide should preferably have a number average molecular weight of about 500 to about 4,000 g/mol, such as about 700 to about 2,000 g/mol and most preferably 800 to 1,800 g/mol as measured by gel permeation chromatography ("GPC") using polystyrene standards for calibration purposes

For the purpose of the present invention, not only one polymer P-(XH)_{z} but also mixtures of polymers P-(XH)_{z} can be used for the preparation of the prepolymers PP. Within those mixtures the chemical nature of P as well as the molecular weights may vary within the described ranges.

A preferred hydroxy-containing polymer to be used as P-(XH)_{z} can be described by structure XVIII:

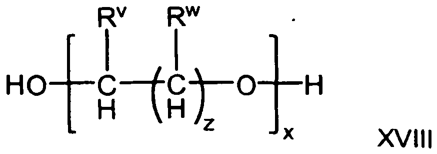

where R^{v} and R^{w} independently are H, methyl or ethyl, z is 1-6, preferably 2-3 and x is 12-45, such as 20-35. Most preferably in hydroxy-containing compounds of general formula XX one or both of R^{v} and R^{w} are H and z is 2 to 3 and the number-average molecular weight determined by the value of x is between 500 and 4000 g/mol more preferably 700 to 2000 g/mol and most preferably 800 to 1600 g/mol.

A preferred amino-containing polymer to be used as P-(XH)_{z} can be described by structure XIX: 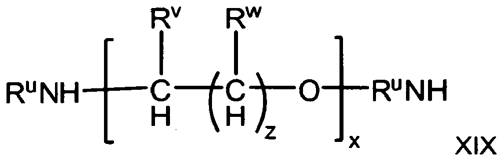 where R^{v}, R^{w}, z and x are defined as in structure XVIII, and R^{u} is H or alkyl. Those compounds lead to polyurea containing prepolymers.

While structures for the hydroxy and amino containing polymers or oligomers have been shown, alternatives for use herein include the thiol versions thereof. And of course combinations of such compounds may be used herein.

The hydroxy, amino and/or thiol containing polyalkylene ethers should be used in a molar ratio of OH, amino and/or SH groups to isocyanate groups of the one or more diisocyanates in a range of 1:0.9 to 1:4.0, such as 1:1.0 to 1:2.5, for instance 1:1.85.

The integer z in P-(XH)_{z} ranges from 1 to 12, preferable 1 to 6, more preferable 2 to 4 and most preferable z is 2 or 3.

### Diisocyanates D-(NCO)2

Diisocyanates for the purposes of this invention can be selected from aromatic, aliphatic or cycloaliphatic diisocyanates, preferably having a molecular weight of about 160 g/mol to 500 g/mol.

Useful diisocyanates include, ethylene diisocyanate, trimethylene diisocyanate, tetramethylene diisocyanate, pentamethylene diisocyanate, hexamethylene diisocyanate, heptamethylene diisocyanate, octamethylene diisocyanate, decamethylene diisocyanate, dodecamethylene diisocyanate, tetradecamethylene diisocyanate, hexadecamethylene diisocyanate, octadecamethylene diisocyanate, eicosamethylene diisocyanate, cyclohexamethylene diisocyanate, cyclopenthalene diisocyanate, or cyclohepthalene diisocyanate, or bis-cyclohexalene, cyclohexylmethylene diisocyanate, tetramethylxylylene diisocyanate, phenyl diisocyanate, toluene diisocyanate (such as, 2,4-diisocyanatotoluene and 2,6-diisocyanatotoluene), 4,4'-diphenyl diisocyanate, 4,4'-diphenylene methane diisocyanate, dianisidine diisocyanate, 1,5-naphthalene diisocyanate, 1,8-naphthalene diisocyanate (1,8-NDI), 4,4'-diphenyl ether diisocyanate, p-phenylene diisocyanate, 4,4'-dicyclo-hexylmethane diisocyanate, 1,3-bis-(isocyanatomethyl) cyclohexane, cyclohexylene diisocyanate, tetrachlorophenylene diisocyanate, 2,6-diethyl-p-phenylenediisocyanate, 3,5-diethyl-4,4'-diisocyanatodiphenyl-methane, tetramethylene diisocyanate, hexamethylene diisocyanate, ethylene diisocyanate, cyclohexylene diisocyanate, nonamethylene diisocyanate, octadecamethylene diisocyanate, 2-chloropropane diisocyanate, 2,2'-diethylether diisocyanate, 3-(dimethylamine) pentane diisocyanate, tetrachlorophenylene diisocyanate-1,4, 3-heptane diisocyanate, transvinylene diisocyanate, 1,6-diisocyanatohexane, 3,5,5-trimethyl-1-isocyano-3-isocyanatomethylcyclohexane (isophorene diisocyanate), N,N',N"'-tri-(6-isocyanatohexyl)-biuret, 2,2,4-trimethyl-1,6-diisocyanatohexane, m-tetramethylxylene diisocyanate 1-methyl-2,4-diisocyanatocyclohexane, 4,4'-diisocyanatodicyclohexylmethane, trimeric isophorene, diisocyanate, trimeric hexane diisocyanate and methyl 2,6-diisocyanatohexanoate.

In a preferred embodiment of the present invention the diisocyanate is selected from the group consisting of 2,4- toluene diisocyanate, 2,4'-methylenediphenyl diisocyanate, 4,4'-methylenediphenyl diisocyanate, hexamethylene diisocyanate, m-tetramethylxylene diisocyanate, isophorone diisocyanate and combinations thereof.

### End-capping agents E-YH

The one or more end-capping used to react with the isocyanate-terminated group of the isocyanate-terminated PP have the general formular E-YH, wherein E is an end-capping residue, selected from the group consisting of aliphatic, heteroaliphatic, araliphatic, heteroaliphatic, aromatic and heteroaromatic residues and YH is selected from NHR', OH and SH with R' being defined as above for the XH group(s) of P-(XH)_{z}.

E can be further substituted for example by reactive functional groups such as OH, primary and secondary amino, thiol, oxazoline, benzoxazine or silane groups.

Preferably E is a phenolic group. More preferable E-YH is a bisphenol such as bisphenol A, bisphenol P, bisphenol M, bisphenol F, bisphenol S, bisphenol AP, bisphenol E or bisphenol TMC, or a hydroxyphenyl ether such as p-hydroxyphenyl ether and p-hydroxyphenyl thioether, or 4,4'-dihydroxy benzophenone, 4,4'-Dihydroxydiphenyl, 2,2'-dihydroxydiphenyl, or 4,4'-cyclohexyliden diphenol, resorcinol or hydrochinon.

However E does not necessarily has to contain a reactive functional group or an aromatic residue. For example n-butyl amine can be employed as an end-capper (E = n-butyl and YH = NH₂) or cardanol (E = m-C₁₅H₃₁₋₂ₙ-phenyl, with n = 0,1,2,3 and YH = OH).

Best results in view of flexural modulus combined with high G1c values are however observed when E is a phenol group and most preferred E-YH is bisphenol A.

The end-capping agent and the isocyanate-terminated PP may be reacted at an appropriate temperature for a sufficient time to cause reaction between the isocyanate groups and the YH groups on the capping agent. Preferably, this reaction continues for a period of about 30 minutes to 4 hours, at a temperature in the range of about 60 to about 100 °C, preferably about 70 to about 90 °C, most preferably about 80 to about 90 °C. A catalyst, such as any of the condensation catalysts discussed above (e.g. dibutyltin dilaurate), may be used to enhance reaction times in preparing the PP. Of course combinations of such compounds may be used herein.

As preferably essentially all of the one or more diisocyanates are reacted with the end-capping agent, an appropriate amount of end-capper is to be used to facilitate such reaction. The precise amount of course will depend on the nature, identity and amount of the remaining reactants that are used to form the adduct and as such will be left to the discretion of those persons of ordinary skill in the art.

In preferred prepolymers of the general structure P-(X-CO-NH-D-NCO)_{z} P is a polyether, X and Y are O, D is a residue obtained by removing the two isocyanate groups of 2,4- toluene diisocyanate, 2,4'-methylenediphenyl diisocyanate, 4,4'-methylenediphenyl diisocyanate, hexamethylene diisocyanate, m-tetramethylxylene diisocyanate or isophorone diisocyanate, E is an aromatic residue comprising a phenolic hydroxyl group, and z = 2 or 3.

### Epoxy Resins

In one embodiment of the present invention the inventive compositions may further comprise as component C) one or more epoxy resins, i.e. epoxy-containing compounds even though the addition of epoxy resins is not necessary. Preferably the amount of epoxy resins employed does not exceed 60 wt.-%, more preferably 40 wt.-% and most preferably 30 wt.-%. Particularly preferable are curable compositions of the present invention that are essentially free of epoxy resins. Commercially available epoxy-containing compounds for use in the curable compositions of the present invention are illustrated below.

The epoxy-containing compounds used may include multifunctional epoxy-containing compounds, such as C₁-C₂₈ alkyl-, poly-phenol glycidyl ethers; polyglycidyl ethers of pyrocatechol, resorcinol, hydroquinone, 4,4'-dihydroxydiphenyl methane (or bisphenol F, such as RE-303-S or RE-404-S available commercially from Nippon Kayuku, Japan), 4,4'-dihydroxy-3,3'-dimethyldiphenyl methane, 4,4'-dihydroxydiphenyl dimethyl methane (or bisphenol A), 4,4'-dihydroxydiphenyl methyl methane, 4,4'-dihydroxydiphenyl cyclohexane, 4,4'-dihydroxy-3,3'-dimethyldiphenyl propane, 4,4'-dihydroxydiphenyl sulfone, and tris(4-hydroxyphenyl) methane; polyglycidyl ethers of transition metal complexes; chlorination and bromination products of the above-mentioned diphenols; polyglycidyl ethers of novolacs; polyglycidyl ethers of diphenols obtained by esterifying ethers of diphenols obtained by esterifying salts of an aromatic hydrocarboxylic acid with a dihaloalkane or dihalogen dialkyl ether; polyglycidyl ethers of polyphenols obtained by condensing phenols and long-chain halogen paraffins containing at least two halogen atoms; phenol novolac epoxy; cresol novolac epoxy; and combinations thereof.

Among the commercially available epoxy-containing compounds suitable for use in the present invention are polyglycidyl derivatives of phenolic compounds, such as those available under the tradenames EPON 825, EPON 826, EPON 828, EPON 1001, EPON 1007 and EPON 1009, cycloaliphatic epoxy-containing compounds such as Araldite CY179 from Huntsman or waterborne dispersions under the tradenames EPI-REZ 3510, EPI-REZ 3515, EPI-REZ 3520, EPI-REZ 3522, EPI-REZ 3540 or EPI-REZ 3546 from Hexion; DER 331, DER 332, DER 383, DER 354, and DER 542 from Dow Chemical Co.; GY285 from Huntsman, Inc.; and BREN-S from Nippon Kayaku, Japan. Other suitable epoxy-containing compounds include polyepoxides prepared from polyols and the like and polyglycidyl derivatives of phenol-formaldehyde novolacs, the latter of which are available commercially under the tradenames DEN 431, DEN 438, and DEN 439 from Dow Chemical Company and a waterborne dispersion ARALDITE PZ 323 from Huntsman.

Cresol analogs are also available commercially such as ECN 1273, ECN 1280, ECN 1285, and ECN 1299 or waterborne dispersions ARALDITE ECN 1400 from Huntsman, Inc. SU-8 and EPI-REZ 5003 are bisphenol A-type epoxy novolacs available from Hexion. Epoxy or phenoxy functional modifiers to improve adhesion, flexibility and toughness, such as the HELOXY brand epoxy modifiers 67, 71, 84, and 505. When used, the epoxy or phenoxy functional modifiers may be used in an amount of about 1:1 to about 5:1 with regard to the heat curable resin.

Of course, combinations of the different epoxy resins (epoxy-containing compounds) are also desirable for use herein.

The epoxy-containing compounds can be used in the composition of the present invention in an amount of preferably 0 to 60, more preferably 5 to 50 and most preferably 10 to 30 percent by weight based on the total weight of the curable composition.

### Optional additives

The inventive compositions may also contain curing catalysts, which are known to those skilled in the art.

Examples of curing agents generally include phenolic compounds such as phenol, bisphenol A, bisphenol F or phenol-formaldehyde resins, anhydrides such as acetic anhydride, amines such as imidazole and imidazole derivatives, sulfonic acids such as para-toluene sulfonic acid, Lewis acids such as boron or aluminum halides and aliphatic and aromatic carboxylic acids.

When used, the curing agent, is present in an amount sufficient to cure the composition, such as about 1 to about 15 parts per hundred parts of curable composition, for instance about 3 to about 10 parts per hundred parts of curable composition.

In general, the curing temperatures of the inventive compositions are between 120 and 220 °C, such as between 150 and 190 °C, for a period of time of about 2 minutes to 5 hours, more preferably of about 60 minutes to 180 minutes. Thus, the inventive compositions can be used at relatively moderate temperatures to achieve very good productivity. The curing can if desired be conducted in two stages, for example, by interrupting the curing process or, if a curing agent is employed for elevated temperatures, by allowing the curable composition to cure partially at lower temperatures.

If desired, reactive diluents, for example styrene oxide, butyl glycidyl ether, 2,2,4-trimethylpentyl glycidyl ether, phenyl glycidyl ether, cresyl glycidyl ether or glycidyl esters of synthetic, highly branched, mainly tertiary, aliphatic monocarboxylic acids, oxazoline group containing compounds may be added to the curable compositions to reduce their viscosity.

In addition tougheners, plasticizers, extenders, microspheres, fillers and reinforcing agents, for example coal tar, bitumen, textile fibres, glass fibres, asbestos fibres, boron fibres, carbon fibres, mineral silicates, mica, powdered quartz, hydrated aluminum oxide, bentonite, wollastonite, kaolin, silica, aerogel or metal powders, for example aluminium powder or iron powder, and also pigments and dyes, such as carbon black, oxide colors and titanium dioxide, fire-retarding agents, thixotropic agents, flow control agents, such as silicones, waxes and stearates, which can, in part, also be used as mold release agents, adhesion promoters, antioxidants and light stabilizers, the particle size and distribution of many of which may be controlled to vary the physical properties and performance of the inventive compositions, may be used in the inventive compositions.

When used, fillers are used in an amount sufficient to provide the desired rheological properties. Fillers may be used in an amount up to about 50 percent by weight, such as about 5 to about 32 percent by weight, for instance about 10 to about 25 percent by weight.

The fillers may be inorganic ones, such as silicas. For instance, the silica filler may be a silica nanoparticle. The silica nanoparticle can be pre-dispersed in epoxy resins, and may be selected from those commercially available under the tradename NANOPOX, such as NANOPOX XP 0314, XP 0516, XP 0525, and XP F360 from Nano Resins, Germany. These NANOPOX products are silica nanoparticle dispersions in epoxy resins, at a level of up to about 50% by weight. These NANOPOX products are believed to have a particle size of about 5 nm to about 80 nm. NANOPOX XP 0314 is reported by the manufacturer to contain 40 weight percent of silica particles having a particle size of less than 50 nm diameter in a cycloaliphatic epoxy resin. Other kinds of fillers may also include core-shell-particles as for example disclosed in International
Patent Application Publication No. WO 2007/064801 A1 (Li).

### Physical properties of the inventive compositions

The curable compositions of the present invention may be cured to obtain cured products having a flexural modulus and flexural strength being the same or higher than the values for a composition not containing component B), i. e. PP, in particular in formulations that do not need to contain epoxy resins. Moreover the toughness "indicators" - K_{1C} and G_{1C} values (K_{1C} is standing for critical stress intensity factor and G_{1C} is standing for critical energy release rate) - should be increased compared to compositions not containing component B).

One aim of the present invention is to provide curable composition, which comprise after curing a flexural modulus of 2800 MPa or more, more preferably 3000 MPa or more and most preferably 3500 MPa or more and exhibit G_{1C} values above 200 J/m², more preferably above 250 J/m² and most preferably above 350 J/m² or even as high as at least about 400 J/m² or at least about 450 J/m².

The K1c and G1c values can be determined according to ASTM D5045-96 using so-called "single etch notch bending (SENB)" test specimens sized 56 mm x 12.7 mm x 3.2 mm.

As noted, the invention relates also to the use of the curable compositions in the formation of prepregs or towpregs formed from a layer or bundle of fibers infused with the inventive heat curable composition.

In this regard, the invention relates to processes for producing a prepreg or a towpreg. One such process includes the steps of (a) providing a layer or bundle of fibers; (b) providing the inventive heat curable composition; and (c) joining the heat curable composition and the layer or bundle of fibers to form a prepreg or a towpreg assembly, respectively, and exposing the resulting prepreg or towpreg assembly to elevated temperature and pressure conditions sufficient to infuse the layer or bundle of fibers with the heat curable composition to form a prepreg or towpreg, respectively.

Another such process for producing a prepreg or towpreg, includes the steps of (a) providing a layer or bundle of fibers; (b) providing the inventive heat curable composition in liquid form; (c) passing the layer or bundle of fibers through the liquid heat curable composition to infuse the layer or bundle of fibers with the heat curable composition; and (d) removing excess heat curable composition from the prepreg or towpreg assembly.

The fiber layer or bundle may be constructed from unidirectional fibers, woven fibers, chopped fibers, non-woven fibers or long, discontinuous fibers.

The fiber chosen may be selected from carbon, glass, aramid, boron, polyalkylene, quartz, polybenzimidazole, polyetheretherketone, polyphenylene sulfide, poly p-phenylene benzobisoaxazole, silicon carbide, phenolformaldehyde, phthalate and napthenoate.

The carbon is selected from polyacrylonitrile, pitch and acrylic, and the glass is selected from S glass, S2 glass, E glass, R glass, A glass, AR glass, C glass, D glass, ECR glass, glass filament, staple glass, T glass and zirconium oxide glass.

The inventive compositions (and prepregs and towpregs prepared therefrom) are particularly useful in the manufacture and assembly of composite parts for aerospace and industrial end uses, bonding of composite and metal parts, core and core-fill for sandwich structures and composite surfacing.

The inventive composition may be in the form of an adhesive, sealant or coating, in which case one or more of an adhesion promoter, a flame retardant, a filler (such as the inorganic filler noted above, or a different one), a thermoplastic additive, a reactive or non-reactive diluent, and a thixotrope may be included. In addition, the inventive compositions in adhesive form may be placed in film form, in which case a support e.g. constructed from nylon, glass, carbon, polyester, polyalkylene, quartz, polybenzimidazole, polyetheretherketone, polyphenylene sulfide, poly p-phenylene benzobisoaxazole, silicon carbide, phenolformaldehyde, phthalate and naphthenoate may be included.

### EXAMPLES

### Synthesis of the toughening additives of the present invention

### 1.1 Synthesis of the prepolymer #1 (PU I) using PTHF 1400

101.7 g of polytetrahydrofuran (Mₙ = 1400 g/mol) and 1.0 g of trimethylolpropane are mixed and melted at 70°C, and water is removed. To this mixture, 27.1 g of 2,4-tolulene diisocyanate (2,4-TDI) are added while stirring. The mixture is then stirred for 40 minutes at 75°C. In a second step, to complete the reaction of the excess isocyanate groups, 33.2 g of bisphenol A and about 30 mg of dibutyltin dilaurate (DBTL) are added at 75°C, and the mixture is stirred for 2 hours at 85°C-90°C. The progress of the reaction is monitored by determining the NCO content of the mixture. The final product does not contain any remaining free NCO groups.

### 1.2 Synthesis of the prepolymer #2 (PU II) using PTHF 1400/2000

101.7 g of polytetrahydrofuran (Mₙ = 1400 g/mol), 144.0 g of polytetrahydrofuran (Mₙ = 2000 g/mol), and 2.0 g of trimethylolpropane are mixed and melted at 70°C, and water is removed. To this mixture, 54.2 g of 2,4-tolulene diisocyanate (2,4-TDI) are added while stirring. The mixture is then stirred for 40 minutes at 75°C. In a second step, to complete the reaction of the excess isocyanate groups, 66.4 g of bisphenol A and about 30 mg of DBTL are added at 75°C, and the mixture is stirred for 2 hours at about 85°C-90 °C. The progress of the reaction is monitored by determining the NCO content of the mixture. The final product does not contain any remaining free NCO groups.

### 1.3 Synthesis of the prepolymer #3 (PU III) using PTHF 1400 and an increased amount of TMP

101.7 g of polytetrahydrofuran (Mₙ = 1400 g/mol) and 2.0 g of trimethylolpropane are mixed and melted at 70°C, and water is removed. To this mixture, 29.1 g of 2,4-toluene diisocyanate are added while stirring. The mixture is then stirred for 40 minutes at 75°C. In a second step, to complete the reaction of the excess isocyanate groups, 33.2 g of bisphenol A and about 30 mg of DBTL are added at 75°C, and the mixture is stirred for 2 hours at 85°C-90°C. The progress of the reaction is monitored by determining the NCO content of the mixture. The final product does not contain any remaining free NCO groups.

### 1.4 Synthesis of the prepolymer #4 (PU IV) using PPG 1010

77.5 g of polypropylene glycol (Mₙ = 1000 g/mol) and 1.0 g of trimethylolpropane are mixed and melted at 70°C, and water is removed. To this mixture, 27.1 g of 2,4-toluene diisocyanate are added while stirring. The mixture is then stirred for 40 minutes at 75°C. In a second step, to complete the reaction of the excess isocyanate groups, 33.2 g of bisphenol A and about 30 mg of DBTL are added at 75°C, and the mixture is stirred for 2 hours at 85°C-90°C. The progress of the reaction is monitored by determining the NCO content of the mixture. The final product does not contain any remaining free NCO groups.

### 1.5 Synthesis of the prepolymer #5 (PU V) using PTHF 2000

100.0 g of polytetrahydrofuran (Mₙ = 2000 g/mol) are melted at 70°C, and water is removed. To this mixture, 17.4 g of 2,4-toluene diisocyanate are added while stirring. The mixture is then stirred for 40 minutes at 75°C. In a second step, to complete the reaction of the excess isocyanate groups, 22.8 g of bisphenol A and about 30 mg of DBTL are added at 75°C, and the mixture is stirred for 2 hours at 85°C-90°C. The progress of the reaction is monitored by determining the NCO content of the mixture. The final product does not contain any remaining free NCO groups.

### 1.6 Synthesis of the prepolymer #6 (PU VI) using PTHF 1800

130.7 g of polytetrahydrofuran (Mₙ = 1800 g/mol), and 1.0 g of trimethylolpropane are mixed and melted at 70°C, and water is removed. To this mixture, 27.1 g of 2,4-toluene diisocyanate are added while stirring. The mixture is then stirred for 40 minutes at 75°C. In a second step, to complete the reaction of the excess isocyanate groups, 33.2 g of bisphenol A and about 30 mg of DBTL are added at 75°C, and the mixture is stirred for 2 hours at 85°C-90°C. The progress of the reaction is monitored by determining the NCO content of the mixture. The final product does not contain any remaining free NCO groups.

### 1.7 Synthesis of the prepolymer #7 (PU VII) using PTHF 1000/2000 and TMXDI

48.4 g of polytetrahydrofuran (Mₙ = 1000 g/mol), 48.4 g of polytetrahydrofuran (Mₙ = 2000 g/mol), and 1.0 g of trimethylolpropane are mixed and melted at 70°C, and water is removed. To this mixture, 38.1 g of m-tetramethylxylene diisocyanate (TMXDI) are added while stirring. The mixture is then stirred for 40 minutes at 75°C. In a second step, to complete the reaction of the excess isocyanate groups, 33.2 g of bisphenol A and about 30 mg of DBTL are added at 75°C, and the mixture is stirred for 2 hours at about 85°C-90 °C. The progress of the reaction is monitored by determining the NCO content of the mixture. The final product does not contain any remaining free NCO groups.

### 1.8 Synthesis of the prepolymer #8 (PU VIII) using PTHF 1400 and 4,4'-MDI

101.7 g of polypropyleneglycol (Mₙ = 1400 g/mol) and 1.0 g of trimethylolpropane are mixed and melted at 70°C, and water is removed. To this mixture, 39.0 g of 4,4'-methylenediphenyl diisocyanate (4,4'-MDI) are added while stirring. The mixture is then stirred for 40 minutes at 75°C. In a second step, to complete the reaction of the excess isocyanate groups, 32.9 g of bisphenol A and about 30 mg of DBTL are added at 75°C, and the mixture is stirred for 2 hours at about 85°C-90 °C. The progress of the reaction is monitored by determining the NCO content of the mixture. The final product does not contain any remaining free NCO groups.

### 1.9 Synthesis of the prepolymer #9 (PU IX) using PTHF 1400 and HDI

101.7 g of polytetrahydrofuran (Mₙ = 1400 g/mol) and 1.0 g of trimethylolpropane are mixed and melted at 70°C, and water is removed. To this mixture, 29.0 g of hexamethylene diisocyanate (HDI) are added while stirring. The mixture is then stirred for 40 minutes at 75°C. In a second step, to complete the reaction of the excess isocyanate groups, 32.9 g of bisphenol A and about 30 mg of DBTL are added at 75°C, and the mixture is stirred for 2 hours at about 85°C-90 °C. The progress of the reaction is monitored by determining the NCO content of the mixture. The final product does not contain any remaining free NCO groups.

### 1.10 Synthesis of the prepolymer #10 (PU X) using PTHF 1400 and IPDI

101.7 g of polytetrahydrofuran (Mₙ = 1400 g/mol) and 1.0 g of trimethylolpropane are mixed and melted at 70°C, and water is removed. To this mixture, 34.6 g of isophorone diisocyanate (IPDI) are added while stirring. The mixture is then stirred for 40 minutes at 75°C. In a second step, to complete the reaction of the excess isocyanate groups, 32.9 g of bisphenol A and about 30 mg of DBTL are added at 75°C, and the mixture is stirred for 2 hours at about 85°C-90 °C. The progress of the reaction is monitored by determining the NCO content of the mixture. The final product does not contain any remaining free NCO groups.

### 1.11 Synthesis of the prepolymer #11 (PU XI) using PTHF 1400 and 2,4'-MDI

101.7 g of polypropyleneglycol (Mn = 1400 g/mol) and 1.0 g of trimethylolpropane are mixed and melted at 70°C, and water is removed. To this mixture, 39.0 g of 2,4'-methylenediphenyl diisocyanate (2,4'-MDI) are added while stirring. The mixture is then stirred for 40 minutes at 75°C. In a second step, to complete the reaction of the excess isocyanate groups, 32.9 g of bisphenol A and about 30 mg of DBTL are added at 75°C, and the mixture is stirred for 2 hours at about 85°C-90 °C. The progress of the reaction is monitored by determining the NCO content of the mixture. The final product does not contain any remaining free NCO groups.

All prepolymers described above have a number average molecular weight in the range of 1000 to 54000 g/mol. The number average molecular weight of said prepolymers was determined by gel permeation chromatography using a Waters Styragel column set, consisting of HR 5, HR 3 und HR 1 columns run at 35°C in THF with a flow rate of 0.9 ml/min. Changes in concentration were detected by a refractive index detector and molecular weights were determined based upon a calibration made of polystyrenes.

### Preparation/evaluation of inventive compositions

Here curable compositions including BOX-#1 as an N-alkyl benzoxazine matrix resin are used.

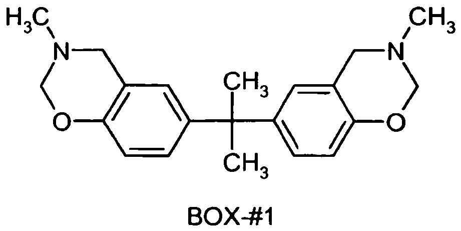

### Sample 1 (as a control sample) consists of BOX-#1 alone.

To test the above-described prepolymers for their toughening properties mixtures of BOX-#1 with different amounts of the prepolymers have been prepared by simply mixing the benzoxazine with the respective prepolymer and applying a vacuum (< 1 mbar) at 105 to 115 °C for about 15 to 30 minutes while stirring, until the prepolymer is homogenously dissolved in the benzoxazine. The thus prepared formulation was stored in a sealed container at room temperature.

**Table 1**

| Sample | Box-#1 in wt. -% | PU prepolymer in wt.-% | | | | | | | | | | |
|---|---|---|---|---|---|---|---|---|---|---|---|---|
| | | PU I | PU II | PU III | PU IV | PU V | PU VI | PU VII | PU VIII | PU IX | PU X | PU XI |
| 1 (Ref.) | 100 | - | - | - | - | - | - | - | - | - | - | - |
| 2 | 85 | 15 | - | - | - | - | - | - | - | - | - | - |
| 3 | 70 | 30 | - | - | - | - | - | - | - | - | - | - |
| 4 | 85 | - | 15 | - | - | - | - | - | - | - | - | - |
| 5 | 70 | - | 30 | - | - | - | - | - | - | - | - | - |
| 6 | 85 | - | - | 15 | - | - | - | - | - | - | - | - |
| 7 | 70 | - | - | 30 | - | - | - | - | - | - | - | - |
| 8 | 80 | - | - | - | 20 | - | - | - | - | - | - | - |
| 9 | 80 | - | - | - | - | 20 | - | - | - | - | - | - |
| 10 | 80 | - | - | - | - | - | 20 | - | - | - | - | - |
| 11 | 80 | - | - | - | - | - | - | 20 | - | - | - | - |
| 12 | 80 | - | - | - | - | - | - | - | 20 | - | - | - |
| 13 | 80 | - | - | - | - | - | - | - | - | 20 | - | - |
| 14 | 80 | - | - | - | - | - | - | - | - | - | 20 | - |
| 15 | 80 | - | - | - | - | - | - | - | - | - | - | 20 |

The curable compositions of Table 1 were cured in sealed containers in a circulating air drying oven at 180 °C for 3 hours. Subsequently the samples were taken out of the drying oven, removed from the container and cooled to room temperature.

The cured Samples were characterized using the following analytical methods:

The glass transition temperatures were obtained by dynamic-mechanical-thermal analysis (DMTA) of Samples cut to a size of 35 mm x 10 mm x 3.2 mm. The Samples were heated from 25 °C with a heating rate of 10 °C/min to a final temperature of 250 °C. The glass transition temperatures were obtained from the maximum value of the loss modulus vs. temperature diagrams.

Flexural strength and flexural modulus were determined according to ASTM D790 using samples of a size of 90 mm x 12.7 mm x 3.2 mm, span = 50.8 mm, speed = 1.27 mm/min.

K1c and G1c values were determined according to ASTM D5045-96 using so-called "single etch notch bending (SENB)" test specimens sized 56 mm x 12.7 mm x 3.2 mm.

Table 2 shows the properties of the test pieces tested in accordance with the procedures described above

**Table 2**

| Sample | DMTA-T_{g} E') [°C] | Flexural Strength [MPa] | Flexural Modulus [MPa] | K1_{c} [MPa·m^{0.5}] | G1c [J/m²] |
|---|---|---|---|---|---|
| 1 (Ref.) | 186 | 100 | 4200 | 0.76 | 150 |
| 2 | 199 | 110 | 3650 | 1.10 | 289 |
| 3 | 203 | 90 | 2550 | 1.17 | 471 |
| 4 | 198 | 130 | 3450 | 1.15 | 338 |
| 5 | 198 | 100 | 2760 | 1.09 | 375 |
| 6 | 198 | 120 | 3650 | 1.02 | 252 |
| 7 | 196 | 105 | 2900 | 1.05 | 332 |
| 8 | n.d. | 125 | 3560 | 1.00 | 247 |
| 9 | n.d. | 100 | 3090 | 1.20 | 409 |
| 10 | n.d. | 110 | 2940 | 1.23 | 452 |
| 11 | n.d. | 115 | 3090 | 1.23 | 452 |
| 12 | 194 | 115 | 3270 | 1.41 | 532 |
| 13 | n.d. | 115 | 3220 | 1.27 | 441 |
| 14 | 192 | 115 | 3310 | 1.23 | 401 |
| 15 | 192 | 120 | 3420 | 1.36 | 472 |

The material testing results show that even a content of 15 % by weight of the PU prepolymer (Sample 2;) incorporated into the benzoxazine system enhances the critical energy release rate G1c and the critical stress intensity factor (K1c) to a great extend. Simultaneously the flexural modulus is only slightly decreased.

## Claims

1. A curable composition comprising:
A) at least one benzoxazine component selected from the group consisting of N-alkyl and N-alkenyl benzoxazine compounds, and
B) a prepolymer of the following general structure:
P-(X-CO-NH-D-NH-CO-Y-E)_{z}
wherein
P is a z-valent residue of an oligomer or polymer,
X and Y independently are selected from the group consisting of NR', O and
S, wherein R' is hydrogen or a residue selected from the group consisting of aliphatic, heteroaliphatic, araliphatic, heteroaraliphatic, aromatic and heteroaromatic residues,
D is a divalent residue obtained by removing the two isocyanate groups of a diisocyanate,
E is a end-capping residue, selected from the group consisting of aliphatic, heteroaliphatic, araliphatic, heteroaraliphatic, aromatic and heteroaromatic residues, and
z is an integer of 1 to 12,
wherein the prepolymer has a number average molecular weight in the range of 1000 to 54000 g/mol (determined according to the method of the description).

2. The curable composition according to claim 1, wherein P is selected from the group consisting of polyether residues and polyester residues.

3. The curable composition according to any preceding claim, wherein X and Y independently are NH and/or O.

4. The curable composition according to any of claims 1 to 3, wherein E is an aromatic residue comprising phenolic hydroxyl groups.

5. The curable composition according to any of claims 1 to 4, wherein z is an integer of 2 to 6.

6. The curable composition according to any of claims 1 to 5, wherein P is a polyether, X and Y are O, D is a residue obtained by removing the two isocyanate groups of 2,4- toluene diisocyanate, 2,4'-methytenediphenyl diisocyanate, 4,4'-methylenediphenyl diisocyanate, hexamethylene diisocyanate, m-tetramethylxylene diisocyanate or isophorone diisocyanate, E is an aromatic residue comprising a phenolic hydroxyl group, and z = 2 or 3.

7. The curable composition according to any of claims 1 to 6, wherein P is a three-valent residue (z=3) derived from a trimethylolpropane.

8. The composition according to any of claims 1 to 7, wherein the at least one benzoxazine component comprises one or more of 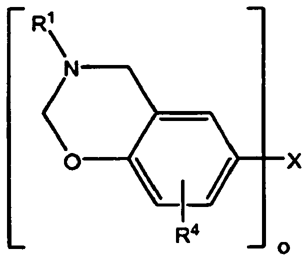 wherein o is 1-4, X is selected from the group consisting of a direct bond (when o is 2), alkyl (when o is 1), alkylene (when o is 2-4), carbonyl (when o is 2), oxygen (when o is 2), thiol (when o is 1), thioether (when o is 2), sulfoxide (when o is 2), and sulfone (when o is 2), R¹ is selected from alkyl and alkenyl, and R⁴ is selected from hydrogen, halogen, alkyl and alkenyl or R⁴, is a divalent residue creating a naphthoxazine residue out of the benzoxazine structure.

9. The composition according to any of claims 1 to 8, wherein the at least one benzoxazine component comprises one or more of 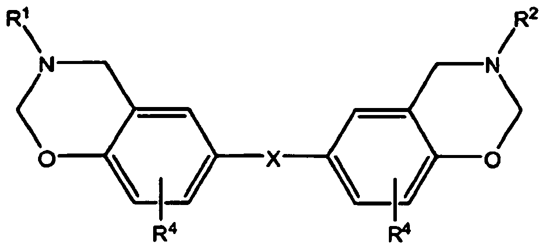 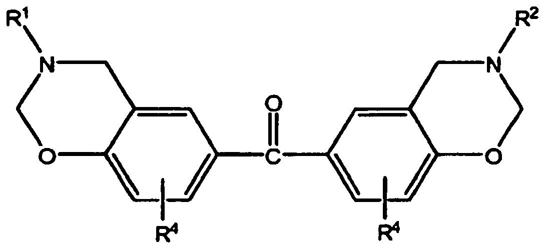 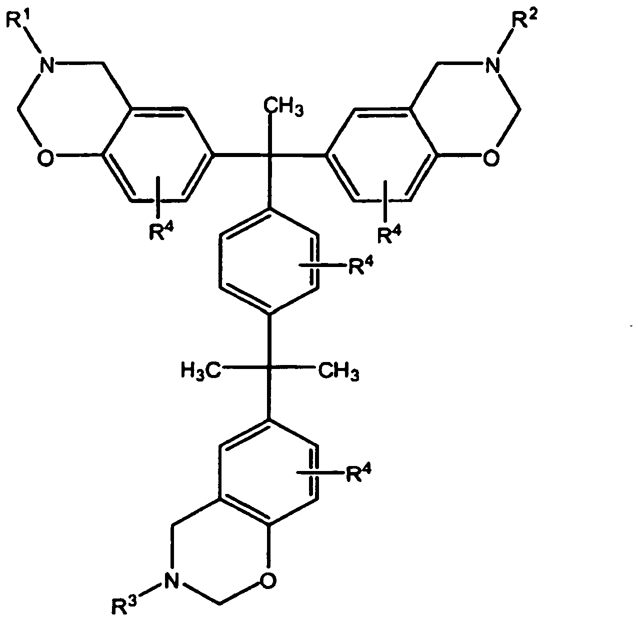 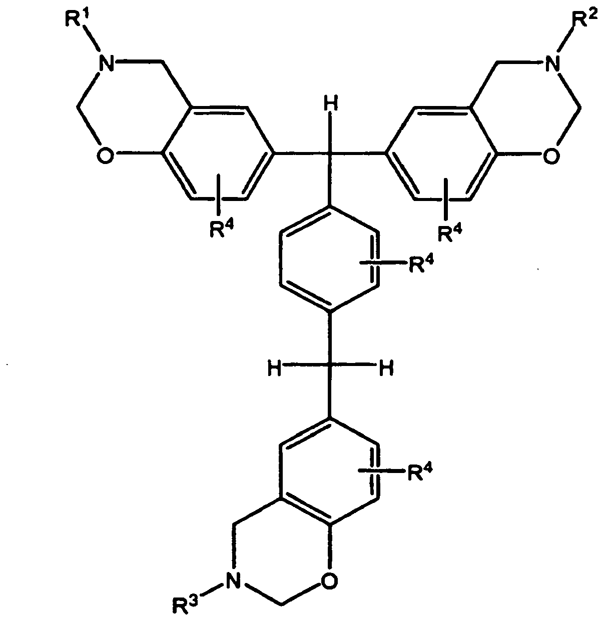 wherein X is selected from the group consisting of a direct bond, CH₂, C(CH₃)₂, C=O, O, S, S=O and O=S=O, and R¹, R², and R³ are the same or different alkyl or alkenyl residues and R⁴ is selected from the group consisting of hydrogen, halogen, alkyl and alkenyl, or R⁴ is a divalent residue creating a naphthoxazine residue out of the benzoxazine structure.

10. The composition according to any of claims 1 to 9, wherein the at least one benzoxazine component is present in an amount in the range of about 50 to about 95 percent by weight, based on the total weight of the composition.

11. The composition according to any of claims 1 to 10, further containing an epoxy resin component.

12. A cured reaction product of the composition according to any of claims 1 to 11.

13. The cured reaction product according to claim 12 comprising a layer or bundle of fibers infused with the composition of any of claims 1 to 11 before curing.

14. A process for producing the cured reaction product of claim 13, steps of which comprise:
A) providing a layer or bundle of fibers;
B) providing the composition of any of claims 1 to 11;
C) joining the composition and the layer or bundle of fibers to form an assembly,
D) optionally removing excess heat curable composition from the assembly;
and exposing the resulting assembly to elevated temperature and pressure conditions sufficient to infuse the layer or bundle of fibers with the heat curable composition to form the cured reaction product.

15. An adhesive, sealant or coating composition comprising the composition according to any of claims 1 to 11.

## Patentansprüche

1. Härtbare Zusammensetzung, die Folgendes umfasst:
A) mindestens eine Benzoxazin-Komponente, die aus der Gruppe bestehend aus N-Alkyl- und N-Alkenylbenzoxazin-Verbindungen ausgewählt ist, und
B) ein Präpolymer mit der folgenden allgemeinen Struktur:
P-(X-CO-NH-D-NH-CO-Y-E)_{z}
wobei
P ein z-wertiger Rest eines Oligomers oder Polymers ist,
X und Y unabhängig aus der Gruppe bestehend aus NR', O und S ausgewählt sind, wobei R' Wasserstoff oder ein Rest ist, der aus der Gruppe bestehend aus aliphatischen, heteroaliphatischen, araliphatischen, heteroaraliphatischen, aromatischen und heteroaromatischen Resten ausgewählt ist,
D ein zweiwertiger Rest ist, der durch Entfernen der zwei Isocyanatgruppen eines Diisocyanats erhalten wurde,
E ein Endkappenrest ist, der aus der Gruppe bestehend aus aliphatischen, heteroaliphatischen, araliphatischen, heteroaraliphatischen, aromatischen und heteroaromatischen Resten ausgewählt ist, und
z eine ganze Zahl von 1 bis 12 ist,
wobei das Präpolymer ein zahlenmittleres Molekulargewicht im Bereich von 1000 bis 54.000 g/mol (bestimmt gemäß dem Verfahren der Beschreibung) aufweist.

2. Härtbare Zusammensetzung nach Anspruch 1, wobei P aus der Gruppe bestehend aus Polyetherresten und Polyesterresten ausgewählt ist.

3. Härtbare Zusammensetzung nach einem der vorhergehenden Ansprüche, wobei X und Y unabhängig NH und/oder O sind.

4. Härtbare Zusammensetzung nach einem der Ansprüche 1 bis 3, wobei E ein aromatischer Rest ist, der phenolische Hydroxygruppen umfasst.

5. Härtbare Zusammensetzung nach einem der Ansprüche 1 bis 4, wobei z eine ganze Zahl von 2 bis 6 ist.

6. Härtbare Zusammensetzung nach einem der Ansprüche 1 bis 5, wobei P ein Polyether ist, X und Y O sind, D ein Rest ist, der durch Entfernen der zwei Isocyanatgruppen von 2,4-Toluoldiisocyanat, 2,4'-Methylendiphenyldiisocyanat, 4,4'-Methylendiphenyldiisocyanat, Hexamethylendiisocyanat, m-Tetramethylxyloldiisocyanat oder Isophorondiisocyanat erhalten wurde, E ein aromatischer Rest ist, der eine phenolische Hydroxygruppe umfasst, und z = 2 oder 3.

7. Härtbare Zusammensetzung nach einem der Ansprüche 1 bis 6, wobei P ein dreiwertiger Rest (z = 3) ist, der von einem Trimethylolpropan abgeleitet wurde.

8. Zusammensetzung nach einem der Ansprüche 1 bis 7, wobei die mindestens eine Benzoxazin-Komponente einen oder mehrere von 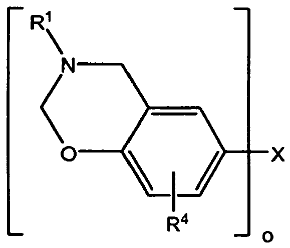 umfasst, wobei o 1 - 4 ist, X aus der Gruppe bestehend aus einer direkten Bindung (wenn o 2 ist), Alkyl (wenn o 1 ist), Alkylen (wenn o 2 - 4 ist), Carbonyl (wenn o 2 ist), Sauerstoff (wenn o 2 ist), Thiol (wenn o 1 ist), Thioether (wenn o 2 ist), Sulfoxid (wenn o 2 ist) und Sulfon (wenn o 2 ist) ausgewählt ist, R¹ aus Alkyl und Alkenyl ausgewählt ist und R⁴ aus Wasserstoff, Halogen, Alkyl und Alkenyl ausgewählt ist oder R⁴ ein zweiwertiger Rest ist, der aus der Benzoxazinstruktur einen Naphthoxazinrest erzeugt.

9. Zusammensetzung nach einem der Ansprüche 1 bis 8, wobei die mindestens eine Benzoxazin-Komponente einen oder mehrere von 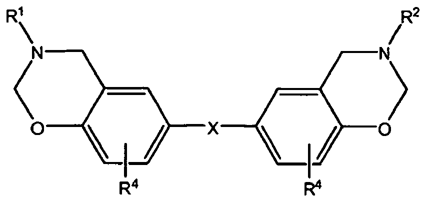 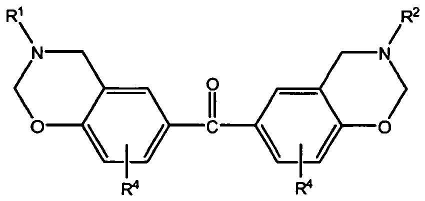 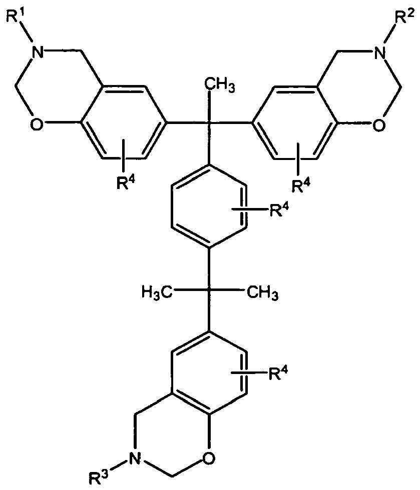 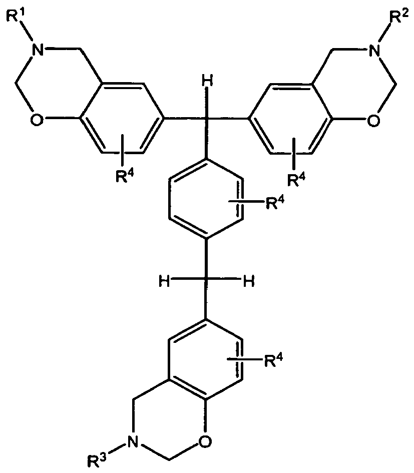 umfasst, wobei X aus der Gruppe bestehend aus einer direkten Bindung, CH₂, C(CH₃)₂, C=O, O, S, S=O und O=S=O ausgewählt ist und R¹, R² und R³ gleiche oder verschiedene Alkyl- oder Alkenylreste sind und R⁴ aus der Gruppe bestehend aus Wasserstoff, Halogen, Alkyl und Alkenyl ausgewählt ist oder R⁴ ein zweiwertiger Rest ist, der aus der Benzoxazinstruktur einen Naphthoxazinrest erzeugt.

10. Zusammensetzung nach einem der Ansprüche 1 bis 9, wobei die mindestens eine Benzoxazin-Komponente in einer Menge im Bereich von etwa 50 bis etwa 95 Gewichtsprozent, bezogen auf das Gesamtgewicht der Zusammensetzung, vorliegt.

11. Zusammensetzung nach einem der Ansprüche 1 bis 10, die weiterhin eine Epoxidharz-Komponente enthält.

12. Gehärtetes Reaktionsprodukt der Zusammensetzung nach einem der Ansprüche 1 bis 11.

13. Gehärtetes Reaktionsprodukt nach Anspruch 12, das eine Schicht oder ein Bündel von Fasern umfasst, die vor der Härtung mit der Zusammensetzung nach einem der Ansprüche 1 bis 11 eingeweicht wurden.

14. Verfahren zum Herstellen des gehärteten Reaktionsprodukts nach Anspruch 13, dessen Schritte Folgendes umfassen:
A) Bereitstellen einer Schicht oder eines Bündels von Fasern;
B) Bereitstellen der Zusammensetzung nach einem der Ansprüche 1 bis 11;
C) Verbinden der Zusammensetzung und der Schicht oder des Bündels von Fasern, um einen Verbund zu bilden;
D) gegebenenfalls Entfernen von überschüssiger wärmehärtbarer Zusammensetzung aus dem Verbund;
und Aussetzen des resultierenden Verbunds gegenüber erhöhten Temperatur- und Druckbedingungen, die dazu ausreichen, die Schicht oder das Bündel von Fasern mit der wärmehärtbaren Zusammensetzung einzuweichen, um das gehärtete Reaktionsprodukt zu bilden.

15. Klebstoff-, Dichtmittel- oder Beschichtungszusammensetzung, die die Zusammensetzung nach einem der Ansprüche 1 bis 11 umfasst.

## Revendications

1. Composition durcissable comprenant :
A) au moins un composant benzoxazine choisi parmi le groupe constitué des composés N-alkyl et N-alcényl benzoxazine, et
B) un prépolymère de la structure générale suivante :
P-(X-CO-NH-D-NH-CO-Y-E)_{z}
dans laquelle
P est un résidu de valence z d'un oligomère ou d'un polymère,
X et Y sont indépendamment choisis parmi le groupe constitué de NR', O
et
S, dans laquelle R' est un atome d'hydrogène ou un résidu choisi parmi le groupe constitué des résidus aliphatiques, hétéroaliphatiques, araliphatiques, hétéroaraliphatiques, aromatiques et hétéroaromatiques,
D est un résidu divalent obtenu par élimination des deux groupes isocyanate d'un diisocyanate,
E est un résidu à coiffage terminal, choisi parmi le groupe constitué des résidus aliphatiques, hétéroaliphatiques, araliphatiques, hétéroaraliphatiques, aromatiques et hétéroaromatiques, et
z est un nombre entier d'une valeur de 1 à 12,
dans laquelle le prépolymère a un poids moléculaire moyen en nombre situé dans la plage de 1 000 à 54 000 g/mol (déterminé selon le procédé de la description).

2. Composition durcissable selon la revendication 1, P étant choisi parmi le groupe constitué des résidus polyéther et des résidus polyester.

3. Composition durcissable selon l'une quelconque des revendications précédentes, X et Y étant indépendamment NH et/ou O.

4. Composition durcissable selon l'une quelconque des revendications 1 à 3, E étant un résidu aromatique comprenant des groupes hydroxyle phénoliques.

5. Composition durcissable selon l'une quelconque des revendications 1 à 4, z étant un nombre entier d'une valeur de 2 à 6.

6. Composition durcissable selon l'une quelconque des revendications 1 à 5, P étant un polyéther, X et Y étant O, D étant un résidu obtenu par élimination des deux groupes isocyanate de diisocyanate de 2,4-toluène, diisocyanate de 2,4'-méthylènediphényle, diisocyanate de 4,4'-méthylènediphényle, diisocyanate d'hexaméthylène, diisocyanate de m-tétraméthylxylène, ou diisocyanate d'isophorone, E est un résidu aromatique comprenant un groupe hydroxyle phénolique, et z = 2 ou 3.

7. Composition durcissable selon l'une quelconque des revendications 1 à 6, P étant un résidu trivalent (z = 3) dérivé d'un triméthylolpropane.

8. Composition selon l'une quelconque des revendications 1 à 7, le au moins un composant benzoxazine comprenant un ou plusieurs de 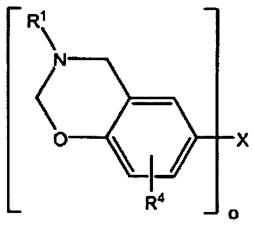 dans laquelle o a la valeur 1 à 4, X est choisi parmi le groupe constitué d'une liaison directe (lorsque o a la valeur de 2), alkyle (lorsque o a la valeur de 1), alcylène (lorsque o a la valeur de 2 à 4), carbonyle (lorsque o a la valeur de 2), oxygène (lorsque o a la valeur de 2), thiol (lorsque o a la valeur de 1), thioéther (lorsque o a la valeur de 2), sulfoxyde (lorsque o a la valeur de 2), et sulfone (lorsque o a la valeur de 2), R¹ est choisi parmi le groupe alkyle et alcényle, et R⁴ est choisi parmi un atome d'hydrogène, d'halogène, alkyle et alcényle ou R⁴ est un résidu divalent créant un résidu naphtoxazine à partir de la structure benzoxazine.

9. Composition selon l'une quelconque des revendications 1 à 8, le au moins un composé benzoxazine comprenant un ou plusieurs de 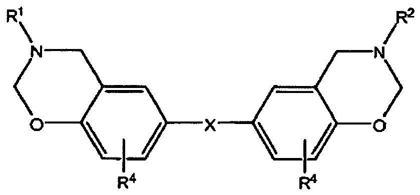 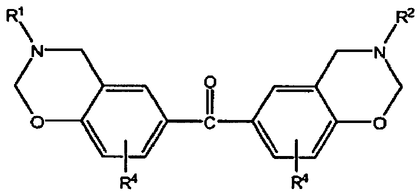 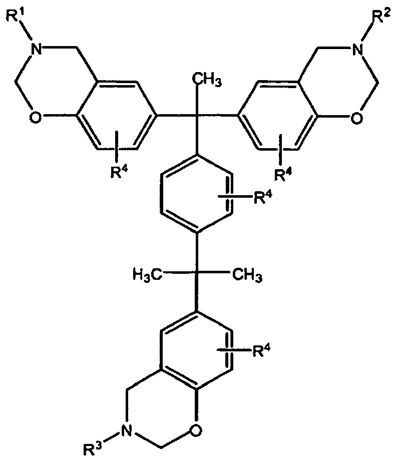 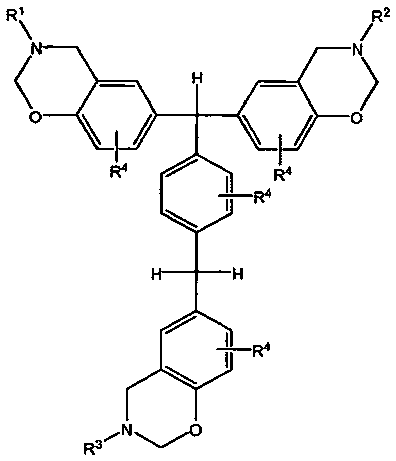 dans lesquelles X est choisi parmi le groupe constitué d'une liaison directe, CH₂, C(CH₃)₂, C=O, O, S, S=O et O=S=O, et R¹, R², et R³ sont des résidus alkyle ou alcényle identiques ou différents et R⁴ est choisi parmi le groupe constitué d'un atome d'hydrogène, d'halogène, alkyle, et alcényle, ou R⁴ est un résidu divalent créant un résidu naphtoxazine à partir de la structure benzoxazine.

10. Composition selon l'une quelconque des revendications 1 à 9, le au moins un composant benzoxazine étant présent en une quantité située dans la plage d'environ 50 à environ 95 pour cent en poids, basée sur le poids total de la composition.

11. Composition selon l'une quelconque des revendications 1 à 10, contenant en outre un composant de résine époxy.

12. Produit réactionnel durci de la composition selon l'une quelconque des revendications 1 à 11.

13. Produit réactionnel durci selon la revendication 12, comprenant une couche ou un faisceau de fibres infusé(e) de la composition selon l'une quelconque des revendications 1 à 11 avant durcissement.

14. Procédé de production d'un produit réactionnel durci selon la revendication 13, dont les étapes comprennent :
A) la fourniture d'une couche ou d'un faisceau de fibres ;
B) la fourniture de la composition selon l'une quelconque des revendications 1 à 11 ;
C) la jonction de la composition et de la couche ou du faisceau de fibres pour former un assemblage,
D) l'élimination éventuelle de la composition thermiquement durcissable de l'assemblage ; et l'exposition de l'assemblage résultant à des conditions de température et de pression élevées suffisantes pour infuser la couche ou le faisceau de fibres de la composition thermiquement durcissable pour former le produit réactionnel durci.

15. Composition adhésive, d'étanchéité ou de revêtement comprenant la composition selon l'une quelconque des revendications 1 à 11.
